# EUROPEAN PATENT APPLICATION

(11) **EP 4 344 285 A1**
(43) Date of publication of application: **27.03.2024**
(21) Application number: 22891552.6
(22) Date of filing: 16.08.2022
(51) Int. Cl.: H04W 24/02

(54) **CARRIER CONFIGURATION METHOD AND SYSTEM FOR DISTRIBUTED ANTENNA SYSTEM, PROCESSING DEVICE, AND CHIP**

(30) Priority: 12.11.2021 CN 202111337257
(71) Applicant: Sunwave Communications Co., Ltd., Hangzhou, Zhejiang 310053 (CN); BTI Wireless Limited, Kowloon Bay, Hongkong 999077 (HK); Bravo Tech Inc., La Mirada, California 90638 (US)
(72) Inventor: XU, Peigao, Hangzhou, Zhejiang 310053 (CN); XU, Yaxue, Hangzhou, Zhejiang 310053 (CN); BAO, Han, Hangzhou, Zhejiang 310053 (CN); FAN, Huan, Hangzhou, Zhejiang 310053 (CN); LING, Bangxiang, Hangzhou, Zhejiang 310053 (CN); JIAN, Tuo, Hangzhou, Zhejiang 310053 (CN); WU, Wenquan, Hangzhou, Zhejiang 310053 (CN)
(74) Representative: Viering, Jentschura & Partner mbB Patent- und Rechtsanwälte
(86) International application number: PCT/CN2022/112683
(87) International publication number: WO 2023/082744

(57) **Abstract**

A carrier configuration method and system for a distributed antenna system, a processing device, and a chip are provided. The distributed antenna system (100) includes at least one access unit (101) and at least one remote unit (103). The method includes: acquiring a configuration parameter of a carrier to be transmitted of at least one access unit (101), the configuration parameter including a mapping relationship between the at least one access unit (101) and the at least one remote unit (103); and establishing a transmission channel between the at least one access unit (101) and the at least one remote unit (103) according to the mapping relationship.

## Description

### CROSS-REFERENCE TO RELATED APPLICATIONS

This application claims priority to Chinese patent applications No. 202111337257.2, filed on November 12, 2021, titled "CARRIER CONFIGURATION METHOD AND SYSTEM FOR DISTRIBUTED ANTENNA SYSTEM, PROCESSING DEVICE, AND CHIP". The content of the above application is hereby incorporated by reference.

### TECHNICAL FIELD

The present invention generally relates to a field of communication, and in particular, to a carrier configuration method and system for a distributed antenna system, a processing device, and a chip.

### BACKGROUND

With the rapid development of mobile Internet, data traffic has maintained rapid growth in recent years, which has brought more pressure to mobile network communication engineering. At present, in the communication engineering domestic and oversea, a single carrier or a broadband analog wireless repeater system is the most widely applied to achieve signal transmission coverage, but scalability thereof is poor, it is difficult to meet business requirements of the 4G (4th generation mobile communication technology) or 5G (5th generation mobile communication technology).

In the related art, Distributed Antenna System (DAS) can apply digital processing and fiber optic transmission technology. DAS can perform digital processing to radio frequency signals of a base station with different operators, different standards, or different frequency bands by an access unit, and group frames can be transmitted in the same fiber optic to an expansion unit, and then transmitted to each remote unit. The remote unit can perform radio frequency conversion and power amplification to inputted digital signals with different standards or different frequency bands, and remote coverage of signals with all standards and frequency bands can be realized by an antenna feeder system.

However, in a process of transmitting signals, when it is necessary to transmit signals from other base stations, it is necessary to add one more access unit, or cut off the current signal source and connect to signal sources of other base stations, which results in a waste of transmission resources, a change procedure is cumbersome, and efficiency of signal transmission is low, which cannot satisfy complex application requirements.

Therefore, an efficient carrier configuration method for a distributed antenna system is urgently required in the related art.

### SUMMARY

According to various embodiments of the present invention, a carrier configuration method and system for a distributed antenna system, a processing device, and a chip are provided.

In a first aspect, a carrier configuration method for a distributed antenna system is provided in the present invention. The distributed antenna system includes at least one access unit and at least one remote unit, and the method includes:
acquiring a configuration parameter of a carrier to be transmitted of at least one access unit, the configuration parameter including a mapping relationship between the at least one access unit and the at least one remote unit; and
establishing a transmission channel between the at least one access unit and the at least one remote unit according to the mapping relationship.

Alternatively, in an embodiment of the present invention, the distributed antenna system further includes at least one radio frequency channel module, corresponding to which the mapping relationship further includes mapping relationships between the at least one radio frequency channel module and the at least one remote unit corresponding one to one.

Alternatively, in an embodiment of the present invention, a process of establishing the mapping relationships between the at least one radio frequency channel module and the at least one remote unit includes:
acquiring frequency band information of the carrier to be transmitted and frequency band mapping information of the distributed antenna system, the frequency band mapping information including frequency band information of the at least one radio frequency channel module and frequency band information of the at least one remote unit;
acquiring at least one radio frequency channel module matching with the frequency band information of the carrier to be transmitted; and
acquiring at least one remote unit matching with the frequency band information of the at least one radio frequency channel module, and establishing the mapping relationships between the at least one radio frequency channel module and the at least one remote unit

Alternatively, in an embodiment of the present invention, a process of establishing the mapping relationships between the at least one radio frequency channel module and the at least one remote unit includes:
acquiring frequency band information of the carrier to be transmitted and frequency band mapping information of the distributed antenna system, the frequency band mapping information including frequency band information of the at least one radio frequency channel module and frequency band information of the at least one remote unit;
acquiring at least one remote unit matching with the frequency band information of the carrier to be transmitted; and
acquiring at least one radio frequency channel module matching with the frequency band information of the at least one remote unit, and establishing mapping relationships between the at least one remote unit and the at least one radio frequency channel module.

Alternatively, in an embodiment of the present invention, after acquiring the configuration parameter of the carrier to be transmitted of at least one access unit, the method further includes performing a validity check of the configuration parameter of the carrier to be transmitted.

Alternatively, in an embodiment of the present invention, the performing the validity check of the configuration parameter of the carrier to be transmitted further includes:
acquiring the mapping relationships between the at least one radio frequency channel module and the at least one remote unit in the configuration parameter; and
returning an error message when either or both of a one-to-many mapping relationship and a many-to-one mapping relationship exist in the mapping relationships.

Alternatively, in an embodiment of the present invention, each of the at least one access unit includes at least one connection enabling end connected to the at least one remote unit, corresponding to which the establishing the transmission channel between the at least one access unit and the at least one remote unit according to the mapping relationship further includes:
selecting and activating, based on the mapping relationship, a connection enabling end corresponding to the mapping relationship such that each of the at least one access unit is connected to the at least one remote unit corresponding to the connection enabling end.

Alternatively, in an embodiment of the present invention, the configuration parameter of the carrier to be transmitted of at least one access unit further includes either or both of a frequency selection parameter and a band selection parameter of the carrier to be transmitted, and either or both of the frequency selection parameter and the band selection parameter includes at least one of the following parameters: an uplink frequency point, a downlink frequency point, a bandwidth, and a filter delay.

In a second aspect, a carrier configuration system for a distributed antenna system is further provided in the present invention. The system includes at least one access unit, at least one remote unit, and a configuration module, the configuration module includes a processor and a configuration port, the processor is configured to perform steps of the carrier configuration method for the distributed antenna system of claim 1, and the configuration port is configured to configure the configuration parameter of the carrier to be transmitted of the at least one access unit.

In a third aspect, a processing device is further provided in the present invention, including a memory and a processor. The memory stores computer program instructions, and the processor is configured to execute the computer program instructions to implement the steps of the carrier configuration method for the distributed antenna system in the above first aspect.

In a fourth aspect, a computer-readable storage medium is further provided in the present invention, storing computer program instructions. The computer program instructions are executed by a processor to implement the steps of the carrier configuration method for the distributed antenna system in the above first aspect.

In a fifth aspect, a chip is further provided in the present invention, including at least one processor. The at least one processor is configured to execute computer program instructions stored in a memory to implement the steps of the carrier configuration method for the distributed antenna system in the above first aspect.

Details of one or more embodiments of the present invention are set forth in the following accompanying drawings and descriptions. Other features, objectives, and advantages of the present invention become obvious with reference to the description, the accompanying drawings, and the claims.

### BRIEF DESCRIPTION OF THE DRAWINGS

Reference may be made to one or more of the accompanying drawings for a purpose of better describing and illustrating the embodiments and/or examples of those applications disclosed herein. Additional details or examples used to describe the accompanying drawings should not be considered a limitation on the scope of any of the disclosed applications, the embodiments and/or examples presently described, and the best mode of these applications as presently understood.
FIG. 1 is a schematic diagram of a distributed antenna system in one or more embodiments.
FIG. 2 is a flowchart of a carrier configuration method for a distributed antenna system in one or more embodiments.
FIG. 3 is a schematic diagram of a distributed antenna system in one or more embodiments.
FIG. 4 is a schematic diagram of a distributed antenna system in one or more embodiments.
FIG. 5 is a schematic diagram of a processing device in one or more embodiments.
FIG. 6 is a schematic diagram of a chip in one or more embodiments.
FIG. 7 is a structural diagram of a computer-readable storage medium in one or more embodiments.

### DETAILED DESCRIPTION OF THE EMBODIMENT

In order to make the purpose, technical solutions and advantages of the present application more clearly understood, the present invention is described and illustrated hereinafter in conjunction with the accompanying drawings and embodiments. It should be understood that the specific embodiments described herein are only for explaining the present invention and are not intended to limit the present invention. All other embodiments acquired by one skilled in the art without creative efforts based on the embodiments of the present invention shall fall within the protection scope of the present invention. In addition, it should be understood that, although the efforts made in such a development process may be complex and lengthy, some changes in design, manufacture, or production based on the technical contents disclosed in the present invention are merely conventional technical means to one skilled in the art relating to the contents disclosed in the present invention, and should not be construed as insufficiency of the contents disclosed in the present invention.

Reference to "embodiment" in the present invention means that a particular feature, structure, or characteristic described in conjunction with an embodiment may be included in at least one embodiment of the present invention. Presence of the phrase "embodiment" at various points in the description does not necessarily always refer to the same embodiment, nor is it a separate or alternative embodiment that is mutually exclusive of other embodiments. It is understood by one skilled in the art, both explicitly and implicitly, that the embodiments described in the present invention may be combined with other embodiments without conflict.

Unless defined otherwise, technical terms or scientific terms involved in the present invention have the same meanings as would generally understood by those skilled in the technical field of the present invention. In the present invention, "a", "an", "one", "the", and other similar words do not indicate a quantitative limitation, which may be singular or plural. The terms such as "comprise", "include", "have" and any variants thereof involved in the present invention are intended to cover a non-exclusive inclusion, for example, processes, methods, systems, products, or devices including a series of steps or modules (units) are not limited to these steps or modules (units) listed, and may include other steps or modules (units) not listed, or may include other steps or modules (units) inherent to these processes, methods, systems, products, or devices. Words such as "join", "connect", "couple", and the like involved in the present invention are not limited to physical or mechanical connections, and may include electrical connections, whether direct or indirect. "A plurality of" involved in the present invention means two or more. The term "and/or" describes an association relationship between associated objects and represents that three relationships may exist. For example, A and/or B may represent the following three cases: only A exists, both A and B exist, and only B exists. Generally, the character "/" indicates an "or" relationship between the associated objects. The terms "first", "second", "third", and the like involved in the present invention are only intended to distinguish similar objects and do not represent specific ordering of the objects.

In addition, numerous specific details are given in the specific embodiments below in order to better illustrate the present invention. It should be understood by one skilled in the art that the present invention can be implemented equally well without certain specific details. In some examples, devices, means, elements, and circuits well known to one skilled in the art are not described in detail in order to bring out the main thrust of the present invention.

In order to understand technical solutions of various embodiments of the present invention better, a technical environment of the present invention is first described below.

A distributed antenna system may be a mobile communication network, and the mobile communication network may be disposed in a preset space or building and include a plurality of antenna nodes which are spatially separated from each other. For example, the antenna nodes may include a directional antenna, an omnidirectional antenna, a horizontal plane antenna, a MIMO (Multiple-Input Multiple-Output) antenna, a gain antenna, and so on. The antenna nodes may be connected to a variety of signal sources via a variety of signal transmission media, the signal transmission media may include a coaxial cable, a fiber optic cable, a LAN (Local Area Network), etc., and the signal sources may include a signal base station provided by commonly used operators, an indoor dedicated base station, etc., which are not limited in the present invention.

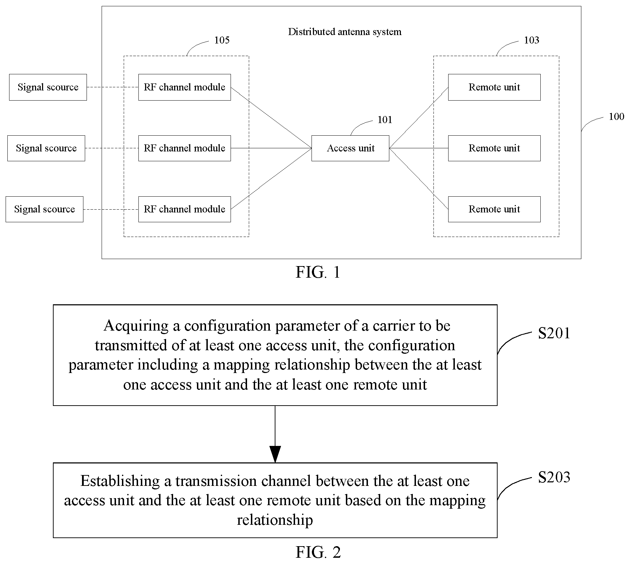

FIG. 1 provides a schematic diagram of a distributed antenna system 100. Referring to FIG. 1, the distributed antenna system 100 may include at least one access unit 101, and at least one remote unit 103. The at least one access unit 101 may further be connected to at least one RF (radio frequency) channel module 105. An end of the at least one RF channel module 105 may be connected to a signal source, e.g., an analog signal from a signal base station may be accessed to the end of the at least one RF channel module 105, the other end of the at least one RF channel module 105 may be coupled with an end of the at least one the access unit 101, and the analog signal to be transmitted may be transmitted to the at least one access unit 101. The at least one access unit 101 may convert the analog signal to be transmitted into a digital signal, and send the digital signal to the at least one remote unit 103 by transmission media such as an optical fiber, a network cable, etc. The at least one remote unit 103 may perform operations such as amplification, filter, etc. to the digital signal, and convert the digital signal into a radio frequency signal to achieve amplified coverage of the signal for use by a user device.

Based on the above technical environment, the following situations may exist in an actual application environment. For example, the distributed antenna system 100 has been deployed in a cell and may access the signal sources provided by three operators denoted as A, B and C. For example, a total of three remote units 103 may be in the cell for signal coverage, and all may access a signal source provided by the operator A. Now, the cell requires switching to a signal source provided by the operator B. The related art requires manually disconnecting the signal source of the operator A to the access unit in a server room and re-connecting to the signal source provided by the operator B, manually adding a new RF transmitter module to the original access unit, or manually connecting a new slave access unit to a master access unit.

Based on technical problems similar to those described above, embodiments of the present invention may provide the user with permission to configure a configuration parameter of a carrier to be transmitted, the configuration parameter includes a mapping relationship between the at least one access unit and the at least one remote unit, so as to solve a problem of a cumbersome process of changing the signal source in the related art. The user may configure or change a transmission parameter of the signal source according to actual application requirements, which is simple to operate and highly efficient.

A carrier configuration method for the distributed antenna system of the present invention is described in detail below in conjunction with the accompanying drawings. FIG. 2 is a flowchart of the carrier configuration method for the distributed antenna system provided in an embodiment of the present invention. Although the present invention provides method operation steps as shown in the following embodiments or in the accompanying drawings, more or fewer operation steps may be included in the method based on routine or without the need for creative labor. At steps that do not logically have a necessary causal relationship, an order of execution of these steps is not limited to an order of execution provided by embodiments of the present invention. The method may be executed in an order of the method shown in the embodiments or in the accompanying drawings or in parallel (e.g., a parallel processor or multi-threaded processing environment) during carrier configuration in practice or when the method is executed.

Specifically, an embodiment of the carrier configuration method for the distributed antenna system 100 provided by the present invention may refer to FIG. 2, the distributed antenna system 100 includes at least one access unit 101 and at least one remote unit 103, and the method includes step 201 and step 203.

Step 201 may include acquiring a configuration parameter of a carrier to be transmitted of at least one access unit 101, the configuration parameter including a mapping relationship between the at least one access unit 101 and the at least one remote unit 103.

In an embodiment of the present invention, the configuration parameter may include parameter information of the carrier to be transmitted by configuration of the user, i.e., the embodiment of the present invention provides the user with a permission to customize the configuration information of the carrier to be transmitted. In an embodiment of the present invention, the permission may be displayed via a user configuration interface, which may be displayed in a display of a client. The client may include a mobile smart phone, a computer (including a laptop, or a desktop computer), a tablet electronic device, a Personal Digital Assistant (PDA), etc., which is not limited in the present invention.

In an embodiment of the present invention, the configuration parameter includes the mapping relationship between the at least one access unit 101 and the at least one remote unit 103. The mapping relationship may include one access unit 101 corresponding to one or more remote units 103, or may include one or more access units 101 corresponding to one remote unit 103. A form of the mapping relationship may include a mapping relationship library, a mapping relationship model, a mapping relationship table, and so on, which are not limited in the present invention.

In the above embodiments, the user may customize the configuration of the carrier to be transmitted, which allows the transmitted carrier more consistent with the actual application requirements and improves efficiency of the distributed antenna system 100 in transmitting signals.

It should be noted that, in other embodiments of the present invention, the configuration parameter of the carrier to be transmitted may also include a frequency selection parameter and/or a band selection parameter of the carrier to be transmitted, and the frequency selection parameter and/or the band selection parameter may specifically include at least one of the following parameters: an uplink frequency point, a downlink frequency point, a bandwidth, or a filter delay.

In an embodiment of the present invention, the frequency selection parameter and/or band selection parameter of the carrier to be transmitted may include an uplink frequency point, a downlink frequency point, a bandwidth, a filter delay, etc. of the carrier to be transmitted. In an embodiment of the present invention, the distributed antenna system 100 may support carriers to be transmitted with 12 selected frequencies and 4 selected bands. Alternatively, the uplink frequency point may be a center frequency of an uplink frequency. For example, in an example, the uplink frequency may be in a range from 400MHz to 470MHz and the uplink frequency point may be 435MHz. Alternatively, the downlink frequency point may be a center frequency of a downlink frequency. The bandwidth may include a frequency width of the carrier to be transmitted. The bandwidth may include 15M, 25M, 30M, and so on. The configuration parameter may also include the uplink frequency and the downlink frequency of the carrier to be transmitted. Specifically, in an example, a range of the uplink/downlink frequency may include (703MHz to 733MHz)/(758MHz to 788MHz), (1710MHz to 1785MHz)/(1805MHz to 1880MHz), and so on. The filter delay may be configured to indicate performance of a filter, e.g., in an example, the higher the filter delay, the better the filter performance, and the better the quality of the transmitted signal. In an embodiment of the present invention, options for the filter delay may include TYPE-A30us, TYPE-B40us, TYPE-C60us, etc., which is not limited in the present invention.

Furthermore, in an embodiment of the present invention, the distributed antenna system 100 may further include at least one RF channel module 105, corresponding to which the mapping relationship further includes mapping relationships between the at least one RF channel module 105 and the at least one remote unit 103 corresponding one to one.

In an embodiment of the present invention, in the distributed antenna system 100, an access unit 101 may be connected to a plurality of RF channel modules 105. The plurality of RF channel modules 105 may have the same or different frequency band information. In an embodiment of the present invention, a remote unit 103 may be mapped with a RF channel module 105, so that a mapping relationship between a RF channel module 105 and a remote unit 103 may be a one-to-one correspondence. It should be noted that the user configuration interface may display the mapping relationship. For example, in one example, the user configuration interface may display "remote_unit_1-access_unit_1", indicating that the remote unit 1 is mapped to a RF channel module 1 connected to the access unit, and the user configuration interface displays "remote_unit_2-access_unit_4", indicating that the remote unit 2 is mapped to a RF channel module 4 connected to the access unit.

In the above embodiments, different mapping relationships between the RF channel module 105 and the remote unit 103 may be established by configuring the configuration parameter of the carrier to be transmitted, so that a formed transmission channel of the carrier to be transmitted may be more in line with application requirements of the user.

In practical applications, a process of forming the mapping relationship between the access unit and the remote unit may be more complicated. First of all, the mapping relationship between the access unit and a fiber optic transmission unit may be formed, and then the mapping relationship between the access unit and the fiber optic transmission unit may be sent to the remote unit, and the remote unit may form a mapping with the fiber optic transmission unit in accordance with this mapping relationship. Based on this, in an embodiment of the present invention, the RF channel module 105 may select one of frequency band-matched remote units 103 to form a mapping relationship, and a process of establishing mapping relationships between the at least one RF channel module 105 and the at least one remote unit 103 may include step 301 to step 305.

Step 301 may include acquiring frequency band information of the carrier to be transmitted and frequency band mapping information of the distributed antenna system 100, the frequency band mapping information including frequency band information of the at least one RF channel module 105 and frequency band information of the at least one remote unit 103.

Step 303 may include acquiring at least one RF channel module 105 matching with the frequency band information of the carrier to be transmitted.

Step 305 may include acquiring at least one remote unit 103 matching with the frequency band information of the at least one RF channel module 105, and establishing mapping relationships between the at least one RF channel module 105 and the at least one remote unit 103.

In an embodiment of the present invention, the frequency band information of the carrier to be transmitted may include a frequency of the carrier to be transmitted. Specifically, in an example, the acquired frequency of the carrier to be transmitted may be 700M, 850M, 900M, and so on. The frequency band information of the carrier to be transmitted may include the frequency band information of the radio frequency channel module 105 accessed on the access unit 101 and the frequency band information of the remote unit 103. The frequency band information of the RF channel module 105 may include a frequency of the RF channel module 105, which may include a range of 700M to 800M, 400M to 500M, 400M to 450M, and so on. The frequency band information of the remote unit 103 may be determined by a frequency band of a power amplifier module in the remote unit 103. Specifically, in an example, the frequency band information of the remote unit 103 may include a range of 700M to 800M, 400M to 500M, 400M to 450M, and so on. After acquiring the frequency band information of the carrier to be transmitted, at least one RF channel module 105 matching with the frequency band information may be looked up. Any one of the at least one RF channel module 105 may select a remote unit 103 matching with frequency band information thereof, a mapping relationship between the RF channel module 105 and the remote unit 103 may be established.

In the above embodiments, at least one RF channel module 105 for transmitting the carrier to be transmitted may be selected first, then one of the at least one remote unit 103 matching with the frequency band information of any of the at least one RF channel module 105 may be selected, a mapping relationship may be established between the selected RF channel module 105 and the selected remote unit 103, and a transmission channel for the carrier to be transmitted may be formed, thereby enabling establishment of the transmission channel more flexible and more in line with the actual application requirements.

The remote unit 103 may also select one of the at least one RF channel module 105 matching with frequency band information and form a mapping relationship with the selected RF channel module 105. Based on this, in another embodiment of the present invention, the process of establishing the mapping relationships between the at least one RF channel module 105 and the at least one remote unit 103 may include step 401 to step 405.

Step 401 may include acquiring frequency band information of the carrier to be transmitted and frequency band mapping information of the distributed antenna system 100, the frequency band mapping information including frequency band information of the at least one RF channel module 105 and frequency band information of the at least one remote unit 103.

Step 403 may include acquiring at least one remote unit 103 matching with the frequency band information of the carrier to be transmitted;

Step 405 may include acquiring at least one RF channel module 105 matching with the frequency band information of the at least one remote unit 103, and establishing mapping relationships between the at least one remote unit 103 and the at least one RF channel module 105.

In an embodiment of the present invention, it is first necessary to acquire the frequency band information of the carrier to be transmitted, the frequency band information of the at least one RF channel module 105, and the frequency band information of the at least one remote unit 103, and then acquire the at least one remote unit 103 matching with the frequency band information of the carrier to be transmitted. Any remote unit 103 may select an RF channel module 105 matching with the frequency band information thereof, and a mapping relationship between the remote unit 103 and the RF channel module 105 may be established.

In the above embodiments, the at least one remote unit 103 for transmitting the carrier to be transmitted may be selected first, then one of the at least one RF channel module 105 matching with the frequency band information of any of the at least one remote unit 103 may be selected, a mapping relationship may be established between the selected RF channel module 105 and the selected remote unit 103, and a transmission channel for the carrier to be transmitted may be formed, thereby enabling establishment of the transmission channel more flexible and more in line with the practical application requirements.

In practical applications, when the user configures the configuration parameter of the carrier to be transmitted, a configuration error may occur possibly, which affects accuracy of signal transmission. Based on this, in an embodiment of the present invention, after acquiring the configuration parameter of the carrier to be transmitted of the at least one access unit 101, the method may further include performing a validity check of the configuration parameter of the carrier to be transmitted.

In an embodiment of the present invention, the validity check of the configuration parameter of the carrier to be transmitted may include checking the validity of the frequency selection parameter and/or the band selection parameter of the carrier to be transmitted. The validity check may include checking whether the frequency point of the carrier to be transmitted is within a frequency band range of the RF channel module 105, and may also include checking whether capacity of the RF channel module 105 is within a preset range, which is not limited in the present invention.

The validity check may also include checking legality of the mapping relationships. In practical applications, the mapping relationships between the at least one RF channel module and the at least one remote unit may correspond one to one. In other words, one RF channel module may only map one remote unit. Based on this, in an embodiment of the present invention, the performing the validity check of the configuration parameter of the band transmission carrier may include step 501 and step 503.

Step 501 may include acquiring the mapping relationships between the at least one RF channel module 105 and the at least one remote unit 103 in the configuration parameter.

Step 503 may include returning an error message when either or both of a one-to-many mapping relationship and a many-to-one mapping relationship exist in the mapping relationships.

In an embodiment of the present invention, the mapping relationships between the at least one RF channel module 105 and the at least one remote unit 103 may be first acquired, and then the correspondence of the mapping relationships may be judged. When a case is existed in which one RF channel module 105 is mapped to a plurality of remote units 103, and/or a case is existed in which a plurality of RF channel modules 105 are mapped to one remote unit 103, the error message may be returned. For example, in an example, when "remote unit_1-RF channel module_1, remote unit_1-RF channel module_2" is displayed on the user configuration interface, a prompt message of "Mapping relationship configuration error, please re-select" may be sent.

In the above embodiments, correctness of the configuration parameter may be ensured by validity check of the mapping relationships, so as to improve the accuracy of signal transmission of the distributed antenna system 100.

Step 203 may include establishing a transmission channel between the at least one access unit 101 and the at least one remote unit 103 based on the mapping relationship.

In an embodiment of the present invention, after acquiring the mapping relationship, the transmission channel of the carrier to be transmitted may be established according to the mapping relationship. For example, in an example, when the mapping relationship is acquired as "access unit 1 - remote unit 1", a transmission channel between the access unit 1 and the remote unit 1 may be established.

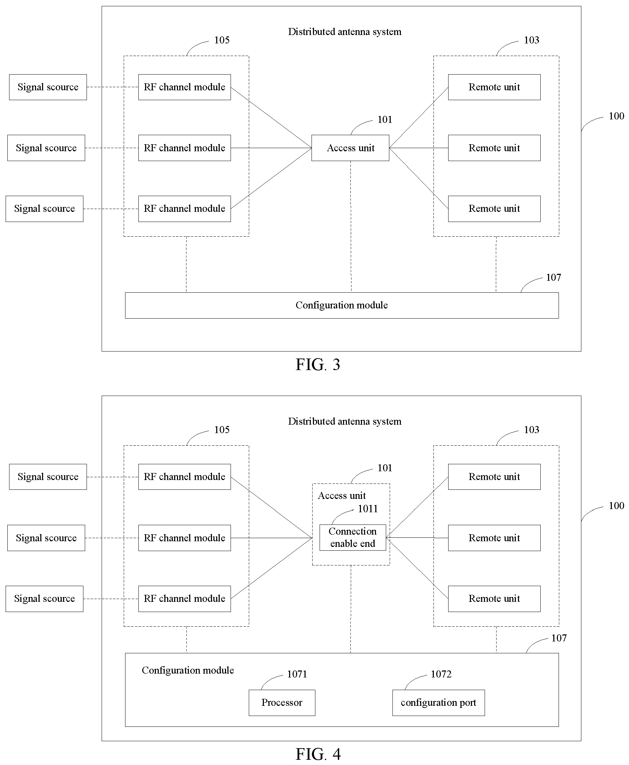

Furthermore, referring to FIG. 4, in an embodiment of the present invention, each of the at least one access unit 101 includes at least one connection enabling end 1011 connected to the at least one remote unit 103, corresponding to which the establishing the transmission channel between the at least one access unit 101 and the at least one remote unit 103 according to the mapping relationship may further include: selecting and activating, based on the mapping relationship, a connection enabling end 1011 corresponding to the mapping relationship such that each of the at least one access unit 101 is connected to the at least one remote unit 103 corresponding to the connection enabling end 1011.

In an embodiment of the present invention, the access unit 101 may include at least one connection enabling end 1011 connected to the at least one remote unit 103, which may activate connection privilege of the corresponding remote unit 103 to the access unit 101 when the connection enabling end 1011 is valid. For example, in an embodiment of the present invention, a connection enabling end 1011A, a connection enabling end 1011B, and a connection enabling end 1011C may be included in the access unit 1. When the connection enabling end 1011A is valid, the connection privilege of the remote unit A to the access unit 1 may be activated. When the connection enabling end 1011B is valid, the connection privilege of the remote unit B to the access unit 1 may be activated. When the connection enabling end 1011C is valid, the connection privilege of the remote unit C to the access unit 1 may be activated. In other words, after determining the mapping relationships between the at least one access unit 101 and the at least one remote unit 103, the corresponding connection enabling end 1011 may be activated according to the mapping relationship. When the connection enabling end 1011 is in an activated state, the transmission channel between the at least one access unit 101 and the at least one remote unit 103 may be established. Specifically, in an example, after acquiring the mapping relationship between the access unit 1 and the remote unit A, the connection enabling end 1011A may be selected and activated so as to establish a transmission channel of the carrier to be transmitted between the access unit 1 and the remote unit A.

In the above embodiments, different mapping relationships may be established by activating different connection enablement ends 1011, thereby realizing the carrier configuration method described in each of the above embodiments in hardware.

The present invention further provides a distributed antenna system 100. Referring to FIG. 3, the distributed antenna system 100 includes at least one access unit 101, at least one remote unit 103, at least one RF channel module 105, and a configuration module 107. An end of the at least one RF channel module 105 is connected to a signal source, e.g., the end of the at least one RF channel module 105 is accessed to an analog signal from a signal base station, and the other end of the at least one RF channel module 105 is coupled with an end of the at least one access unit 101, and transmits the analog signal to be transmitted to the at least one access unit 101. The at least one access unit 101 may convert the analog signal to be transmitted into a digital signal, and send the digital signal to the at least one remote unit 103 via transmission media such as an optical fiber, a network cable, etc. The at least one remote unit 103 may perform operations such as amplification, filter, etc. to the digital signal, and convert the digital signal into a RF signal to realize the amplified coverage of the signal. Referring to FIG. 4, the configuration module 107 includes a processor 1071 and a configuration port 1072, the processor 1071 is configured to perform steps of the carrier configuration method for the distributed antenna system described in the above embodiments, and the configuration port 1072 is configured to configure the configuration parameter of the carrier to be transmitted of the at least one access unit 101. The configuration port 1072 may be connected to a server, and the connection may include a wired connection, a wireless connection, and so on. The wireless connection may include a WiFi connection, a Bluetooth connection, and so on, which is not limited in the present invention. The configuration port 1072 may further be connected to a display screen to provide the user with a configuration interface displaying the configuration parameter.

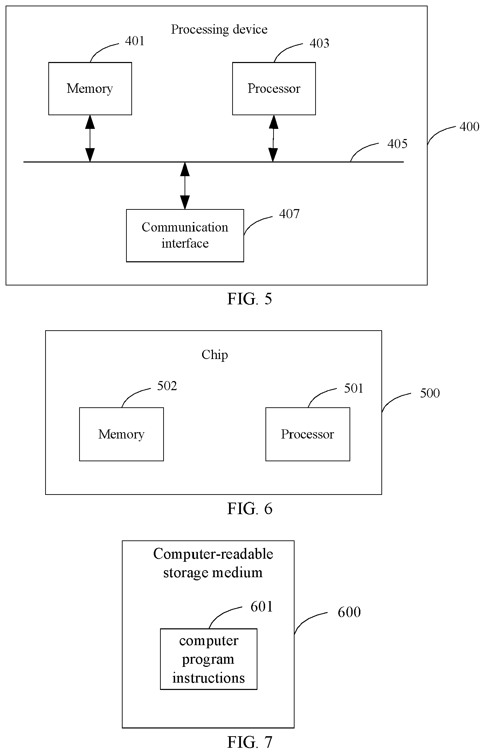

Referring to FIG. 5, the present invention further provides a processing device 400 including a memory 401 and a processor 402, the memory 401 stores computer program instructions, and the processor 402 is configured to execute the computer program instructions to implement the steps of the carrier configuration method for the distributed antenna system as described in the above embodiments.

The processing device 400 may be a physical device or a cluster of physical devices, or may be a virtualized cloud device, such as at least one cloud computing device in a cloud computing cluster. For ease of understanding, the present invention exemplifies a structure of the processing device with the processing device as a separate physical device.

Referring to FIG. 5, the processing device 400 includes a processor 403 and a memory 401 for storing computer program instructions of the processor. The processor 403 is configured to implement the device when executing the computer program instructions. The processing device 400 may further include a bus 405 and a communication interface 407. The memory 401, the processor 403, and the communication interface 407 may communicate with each other via the bus 405. The bus 405 may be a peripheral component interconnect (PCI) bus or an extended industry standard architecture (EISA) bus, and so on. The bus may be categorized as an address bus, a data bus, a control bus, and so on. For ease of representation, only one bold line is used in FIG. 5, but this does not mean that there is only one bus or one type of bus. The communication interface 407 is configured to communicate with the outside.

The processor 403 may be a central processing unit (CPU). The memory 401 may include a volatile memory, such as a random access memory (RAM). The memory 401 may also include a non-volatile memory, such as a read-only memory (ROM), a flash memory, a Hard Disk Drive (HDD) or a Solid State Drive (SSD), and so on.

It could be understood by one skilled in the art that the structure illustrated in FIG. 5, which is only a block diagram of a portion of a structure related to the embodiment of the present invention, does not constitute a limitation on the computer device to which the embodiment of the present invention is applied, and that the specific computer device may include more or fewer components than those shown in the drawings, or may combine some of the components, or may have a different arrangement of components.

Referring to FIG. 6, the present invention further provides a chip 500 including at least one processor 501. The at least one processor 501 is configured to execute computer program instructions stored in the memory 502 to perform the steps of the carrier configuration method for the distributed antenna system described in the above embodiments.

Referring to FIG. 7, the present invention further provides a computer-readable storage medium 600, which stores computer program instructions 601, and the computer program instructions are executed by a processor to implement the steps of the carrier configuration method for the distributed antenna system described above.

The computer-readable storage medium may be a tangible device that can hold and store instructions used by an instruction execution device. The computer-readable storage medium may be, but is not limited to, an electrical storage device, a magnetic storage device, an optical storage device, an electromagnetic storage device, a semiconductor storage device, or any suitable combination thereof. More specific examples of computer-readable storage media (a non-exhaustive list) may include: a portable computer disk, a hard disk, a Random Access Memory (RAM), a Read Only Memory (ROM), an Electrically Programmable Read-Only Memory (EPROM) or a flash memory), a Static Random-Access Memory (SRAM), a Portable Compact Disc Read-Only Memory (CD-ROM), a Digital Video Disc (DVD), a memory stick, a floppy disk, a mechanical encoding device, a punched card or a convex structure in a recess on which instructions are stored, and any suitable combination thereof.

The computer program instructions described herein may be downloaded from a computer-readable storage medium to a respective computing/processing device or to an external computer or external storage device via a network, such as the Internet, a local area network, a wide area network, and/or a wireless network. The network may include copper transmission cables, fiber optic transmission, wireless transmission, routers, firewalls, switches, gateway computers, and/or edge servers. A network adapter card or network interface in each computing/processing device may receive computer program instructions from the network and forwards the computer program instructions for storage in a computer-readable storage medium in each computing/processing device.

The computer program instructions configured to perform the operations of the present invention may be assembly instructions, Instruction Set Architecture (ISA) instructions, machine instructions, machine-related instructions, microcode, firmware instructions, state setting data, or source or object code written in any combination of one or more programming languages, the programming languages including Object-oriented programming languages - such as Small talk, C++, etc., and conventional procedural programming languages - such as "C" language or the like. The computer program instructions may be executed entirely on a computer of the user, partially on the computer of the user, as a separate software package, partially on the computer of the user and partially on a remote computer, or entirely on a remote computer or server. In the case of a remote computer, the remote computer may be connected to the computer of the user via any kind of network, including a local area network (LAN) or a wide area network (WAN), or, may be connected to an external computer (e.g., be connected via the Internet provided by an Internet service provider). In some embodiments, an electronic circuit may be personalized by state information of computer program instructions, such as a programmable logic circuit, a Field-Programmable Gate Array (FPGA), or a Programmable Logic Array (PLA). The electronic circuit may execute computer program instructions, thereby realizing aspects of the present invention.

Aspects of the present invention are described herein with reference to flowcharts and/or block diagrams of the method and the device according to embodiments of the present invention. It should be understood that each box of the flowchart and/or block diagram, as well as combinations of boxes in the flowchart and/or block diagram, may be implemented by the computer program instructions.

These computer program instructions may be provided to a processor of a general-purpose computer, a special-purpose computer, or other programmable data-processing devices, thereby producing a machine such that the instructions, when executed by the processor of the computer or other programmable data-processing devices, produce a device that implements the functions/actions specified in one or more of the boxes in the flowchart and/or block diagram. It is also possible to store these computer program instructions in a computer-readable storage medium that causes the computer, the programmable data-processing devices, and/or other device to function in a particular manner. The computer-readable medium with the instructions stored thereon may include an article of manufacture including instructions for implementing aspects of the functions/actions specified in one or more of the boxes in the flowchart and/or in the block diagram.

It is also possible to load computer program instructions onto a computer, other programmable data processing devices, or other devices such that a series of operational steps are performed on the computer, other programmable data processing devices, or other devices to produce a computer-implemented process. The instructions executed on the computer, other programmable data processing devices, or other devices may implement the function/action specified in one or more of the boxes in the flowchart and/or in the block diagram.

The flowcharts and block diagrams in the accompanying drawings show the architecture, functionality, and operation of possible implementations of devices, systems, and methods according to various embodiments of the present invention. At this point, each box in the flowcharts or block diagrams may represent a module, a program segment, or a portion of an instruction, and the module, the program segment, or the portion of the instruction may include one or more executable instructions configured to achieve a specified logical function. In some implementations as replacements, the functions labeled in the boxes may also occur in a different order than that labeled in the accompanying drawings. For example, two consecutive boxes may actually be executed substantially in parallel, and may sometimes be executed in reverse order, depending on the function involved.

The above-described embodiments express only several embodiments of the present invention, which are described in a more specific and detailed manner, but are not to be construed as a limitation of the patented scope of the invention. It should be pointed out that, for one skilled in the art, several deformations and improvements can be made without departing from the conception of the present invention, which all fall within the scope of protection of the present invention. Therefore, the scope of protection of the present invention shall be subject to the attached claims.

## Claims

1. A carrier configuration method for a distributed antenna system, **characterized in that** the distributed antenna system comprises at least one access unit and at least one remote unit, and the method comprises:
acquiring a configuration parameter of a carrier to be transmitted of at least one access unit, wherein the configuration parameter includes a mapping relationship between the at least one access unit and the at least one remote unit; and
establishing a transmission channel between the at least one access unit and the at least one remote unit according to the mapping relationship.

2. The carrier configuration method for the distributed antenna system of claim 1, wherein the distributed antenna system further comprises at least one radio frequency channel module, corresponding to which the mapping relationship further comprises mapping relationships between the at least one radio frequency channel module and the at least one remote unit corresponding one to one.

3. The carrier configuration method for the distributed antenna system of claim 2, wherein a process of establishing the mapping relationships between the at least one radio frequency channel module and the at least one remote unit comprises:
acquiring frequency band information of the carrier to be transmitted and frequency band mapping information of the distributed antenna system, wherein the frequency band mapping information comprises frequency band information of the at least one radio frequency channel module and frequency band information of the at least one remote unit;
acquiring at least one radio frequency channel module matching with the frequency band information of the carrier to be transmitted; and
acquiring at least one remote unit matching with the frequency band information of the at least one radio frequency channel module, and establishing the mapping relationships between the at least one radio frequency channel module and the at least one remote unit.

4. The carrier configuration method for the distributed antenna system of claim 2, wherein a process of establishing the mapping relationships between the at least one radio frequency channel module and the at least one remote unit comprises:
acquiring frequency band information of the carrier to be transmitted and frequency band mapping information of the distributed antenna system, wherein the frequency band mapping information comprises frequency band information of the at least one radio frequency channel module and frequency band information of the at least one remote unit;
acquiring at least one remote unit matching with the frequency band information of the carrier to be transmitted; and
acquiring at least one radio frequency channel module matching with the frequency band information of the at least one remote unit, and establishing mapping relationships between the at least one remote unit and the at least one radio frequency channel module.

5. The carrier configuration method for the distributed antenna system of claim 1, wherein after acquiring the configuration parameter of the carrier to be transmitted of at least one access unit, the method further comprises:
performing a validity check of the configuration parameter of the carrier to be transmitted.

6. The carrier configuration method for the distributed antenna system of claim 5, wherein the performing the validity check of the configuration parameter of the carrier to be transmitted further comprises:
acquiring the mapping relationships between the at least one radio frequency channel module and the at least one remote unit in the configuration parameter; and
returning an error message when either or both of a one-to-many mapping relationship and a many-to-one mapping relationship exist in the mapping relationships.

7. The carrier configuration method for the distributed antenna system of claim 1, wherein each of the at least one access unit comprises at least one connection enabling end connected to the at least one remote unit, corresponding to which the establishing the transmission channel between the at least one access unit and the at least one remote unit according to the mapping relationship further comprises:
selecting and activating, based on the mapping relationship, a connection enabling end corresponding to the mapping relationship such that each of the at least one access unit is connected to the at least one remote unit corresponding to the connection enabling end.

8. The carrier configuration method for the distributed antenna system of claim 1, wherein the configuration parameter of the carrier to be transmitted of at least one access unit further comprises either or both of a frequency selection parameter and a band selection parameter of the carrier to be transmitted, and either or both of the frequency selection parameter and the band selection parameter comprises at least one of the following parameters:
an uplink frequency point, a downlink frequency point, a bandwidth, and a filter delay.

9. A distributed antenna system, **characterized by** comprising at least one access unit, at least one remote unit, and a configuration module, wherein the configuration module comprises a processor and a configuration port, the processor is configured to perform steps of the carrier configuration method for the distributed antenna system of any one of claims 1 to 8, and the configuration port is configured to configure the configuration parameter of the carrier to be transmitted of the at least one access unit.

10. A processing device, comprising a memory and a processor, **characterized in that** the memory stores computer program instructions, and the processor is configured to execute the computer program instructions to perform steps of the carrier configuration method for the distributed antenna system of any one of claims 1 to 8.

11. A computer-readable storage medium, storing computer program instructions, **characterized in that** the computer program instructions are executed by a processor to implement steps of the carrier configuration method for the distributed antenna system of any one of claims 1 to 8.

12. A chip, **characterized by** comprising at least one processor, wherein the processor is configured to execute computer program instructions stored in a memory to perform steps of the carrier configuration method for the distributed antenna system of any one of claims 1 to 8.
